# EUROPÄISCHE PATENTANMELDUNG

(11) **EP 1 599 072 A2**
(43) Veröffentlichungstag der Anmeldung: **23.11.2005**
(21) Anmeldenummer: 04012725.0
(22) Anmeldetag: 28.05.2004
(51) Int. Cl.: H05B 3/26

(54) **Heizeinrichtung in Form einer Paneele oder eines dünnen Schichtenverbundes**

(30) Priorität: 17.05.2004 DE 102004024769
(71) Anmelder: Steller, Bernd, 76887 Böllenborn (DE)
(72) Erfinder: Rothengass, Wolfgang, 74383 Limbach-Laudenberg (DE)
(74) Vertreter: Naumann, Ulrich

(57) **Zusammenfassung**

Eine Heizeinrichtung (1), vorzugsweise in Form einer Paneele oder eines dünnen Schichtverbundes, umfasst im Hinblick auf die Aufgabe, eine einfache Fertigung zu ermöglichen, die Umwandlung eines Höchstmaßes der eingetragenen elektrischen Energie in Wärme bzw. Wärmestrahlung zu ermöglichen, und ein unerwünschtes Abstrahlen der erzeugten Wärme außerhalb des zu heizenden Raums zu verhindern,
- eine für Infrarotstrahlung durchlässige Trägerschicht (2),
- eine zur Erzeugung und Abgabe von Wärme durch Strahlung und/oder Konvektion dienende Heizschicht (3), und
- eine auf der der Trägerschicht (2) abgewandten Seite der Heizschicht (3) ausgebildete, Infrarotstrahlung zumindest teilweise reflektierende Schutzschicht (4),
wobei die Heizschicht (3) eine elektrisch gut leitende Matrix und Einlagerungen aus Halbleiter- und/oder Leitermaterial sowie wärmespeichernde Einschlüsse (5) umfasst und wobei die Heizschicht (3) über zwei Elektroden (6) elektrisch kontaktiert ist.

## Beschreibung

Die Erfindung betrifft eine Heizeinrichtung, vorzugsweise in Form einer Paneele oder eines dünnen Schichtverbundes.

Aus der FR 2 683 919 ist eine Heizeinrichtung bzw. Kompositstruktur zum Reflektieren oder Leiten von Wärme in der Art eines Verbundglases bekannt. Die Struktur besteht hierbei aus mindestens fünf Schichten, nämlich einer Schicht aus Titanoxid, einer Schicht zur Reflexion bzw. zur Leitung von Wärmestrahlen, einer Metalloxidschicht, einer Edelmetallschicht sowie einer weiteren Metalloxidschicht.

Die Aufgabe der aus dieser Druckschrift bekannten Struktur besteht darin, in der Art bekannter getönter bzw. metallbedampfter Fensterscheiben den Durchlass sichtbaren Lichts zu erlauben, während unerwünschte Wärmestrahlung reflektiert werden soll.

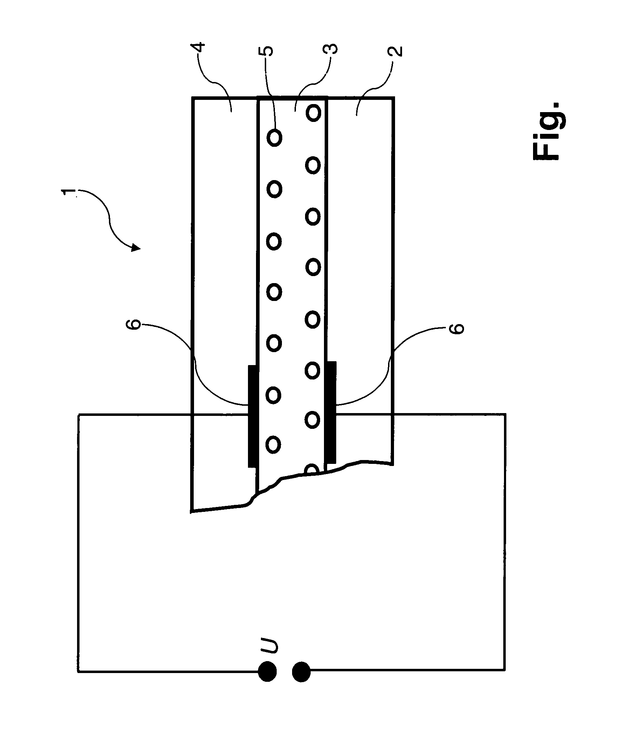

In der Druckschrift wird jedoch weitergehend vorgeschlagen, an die Schicht zur Reflexion bzw. Durchleitung von Wärmestrahlen (siehe Bezugszeichen 4 in Fig. 1 sowie Fig. 3 der Druckschrift) eine elektrische Spannung anzulegen, um die dadurch erzeugte Wärme in einem durch die Kompositstruktur abgetrennten Raum zu nutzen.

Gemäß der Druckschrift besteht die Schicht zur Reflexion bzw. Durchleitung von Wärmestrahlung aus Metallsilikaten, Carbon und Zirkon.

Soll die aus der FR 2 683 919 bekannte Kompositstruktur als Heizeinrichtung benutzt werden, sind hierbei jedoch einige Probleme von Bedeutung.

Zunächst ist die gewünschte Abstrahlung der erzeugten Wärme in den zu heizenden Raum dadurch behindert, dass mindestens eine Schicht aus Titanoxid bzw. mehrere Schichten aus Oxiden oder Metallen die erzeugte Strahlung teilweise oder vollständig absorbieren können.

Weiterhin ist nachteilig, dass eine unerwünschte Abstrahlung der erzeugten Wärme auf die Außenseite des zu heizenden Raums, also in anderen Worten ein Energieverlust, nicht vollständig verhindert wird. Bedingt durch die Auslegung der Kompositstruktur als getönte bzw. metallbedampfte Fensterscheibe und der damit einhergehenden nicht vollständigen Abschirmung von infrarotem Licht zur Außenseite hin ist ein solcher Wärmeverlust nicht zu verhindern.

Weiterhin ist nachteilig, dass die aus dem Stand der Technik bekannte Kompositstruktur in Ihrer endgültigen Einbauform aus mindestens acht Schichten besteht (siehe Fig. 3 der FR 2 683 919). Dies ist mit einem hohen Konstruktions- und Fertigungsaufwand verbunden.

Insgesamt gesehen ist bei der vorbekannten Kompositstruktur problematisch, dass sie sich nur mit hohem Energieaufwand betreiben lässt, oder in anderen Worten, dass sie sich nur unter Inkaufnahme hoher Energieverluste als Heizeinrichtung betreiben lässt.

Der vorliegenden Erfindung liegt daher die Aufgabe zugrunde, eine Heizeinrichtung, vorzugsweise in Form einer Paneele oder eines dünnen Schichtverbundes, anzugeben, die einfach zu fertigen ist, die ein Höchstmaß der eingetragenen elektrischen Energie in Wärme bzw. Wärmestrahlung umwandelt und die ein unerwünschtes Abstrahlen der erzeugten Wärme außerhalb des zu heizenden Raums verhindert.

Erfindungsgemäß wird die voranstehende Aufgabe hinsichtlich einer Heizeinrichtung mit den Merkmalen des Patentanspruchs 1 gelöst.

In erfindungsgemäßer Weise ist zunächst erkannt worden, dass für eine maximale Energieausbeute die dem zu heizenden Raum zugewandte Trägerschicht des Schichtverbundes für Infrarotstrahlung durchlässig ist. Hierdurch wird eine unerwünschte Energiedissipation in dem Schichtverbund selber verhindert. Die Abstrahlung der erzeugten Wärme in den zu heizenden Raum ist durch die Trägerschicht in keiner Weise behindert.

Weiterhin ist erkannt worden, dass eine gemäß geltendem Patentanspruch 1 ausgebildete Heizschicht eine besonders gute Energieausbeute liefert. Die Heizschicht besteht hierzu aus einer elektrisch gut leitenden Matrix, aus Einlagerungen aus Halbleiter- und/oder Leitermaterial, in denen die Wärme bzw. Wärmestrahlung erzeugt wird, und aus wärmespeichernden Einschlüssen, die durch benachbarte Einlagerungen aus Halbleiter- und/oder Leitermaterial erzeugte Wärme aufnehmen, speichern und bei Bedarf wieder an diese abgeben können.

In ganz besonders vorteilhafter Weise wird hierdurch erreicht, dass selbst nach dem Abschalten der elektrischen Spannung die Einlagerungen aus Halbleiter- und/oder Leitermaterial durch benachbarte, wärmespeichernde Einschlüsse Wärme beziehen können. Diese Wärme führt dazu, dass die Einlagerungen aus Halbleiter- und/oder Leitermaterial weiterhin Infrarotstrahlung aussenden können, obwohl keine elektrische Spannung mehr anliegt. Insgesamt führen die wärmespeichernden Einschlüsse zu einer "Glättung" des Strahlungsverhaltens und erlauben eine Ausnutzung der "Nachschwingung" von Halbleiter- und/oder Leitermolekülen selbst bei ausgeschaltetem Strom.

Weiterhin ist erkannt worden, dass ein unerwünschtes Abstrahlen von Wärme bzw. Wärmestrahlung außerhalb des zu heizenden Raums dadurch verhindert werden kann, dass auf der der Trägerschicht abgewandten Seite der Heizschicht eine Schutzschicht vorgesehen wird, die Infrarotstrahlung zumindest teilweise reflektiert.

Die elektrisch gut leitende Matrix der Heizschicht besteht in einer bevorzugten Ausführungsform aus reinem Kohlenstoff. Reiner Kohlenstoff (Carbon) ist besonders hitzebeständig und kann bis ca. 390 °C erhitzt werden. Kohlenstoff mit geringerer Reinheit kann im Allgemeinen nur weniger stark thermisch belastet werden. Außerdem wurde bei der Verwendung von Kohlenstoff geringerer Reinheit festgestellt, dass dieser bei der hier in Rede stehenden thermischen Belastung deutlich wahrnehmbare Alterungserscheinungen bzw. mit fortschreitender Nutzung einen thermischen Zerfall zeigt.

Der Kohlenstoff könnte als Pulver mit einer Korngröße im Mikrometerbereich vorliegen. Dadurch lässt er sich besonders gut verarbeiten und ist zur Herstellung einer besonders dünnen Heizschicht gut geeignet.

Die wärmespeichernden Einschlüsse, die in der Heizschicht enthalten sind, könnten aus Keramik und/oder Glas bestehen. Diese Materialien lassen sich besonders schnell aufheizen, sind aber gleichzeitig besonders temperaturbeständig und liefern auch bei nicht an der Heizschicht anliegenden elektrischen Spannung durch Abgabe gespeicherter Wärme an die Einlagerungen aus Halbleiter- und/oder Leitermaterial genügend Energie, um eine ununterbrochene Wärmestrahlungsemission der Heizschicht zu ermöglichen.

Die Einschlüsse aus Keramik oder Glas könnten aus reinem SiO₂ oder aus einer SiO₂ enthaltenden Mischung bestehen. Prinzipiell ist hier jedoch die Verwendung beliebiger reiner Gläser, mit Metallen dotierten Gläsern, Keramiken oder Kombinationen hiervon denkbar.

Das Halbleiter- und/oder Leitereigenschaften aufweisende Material in der Heizschicht emittiert in einer besonders bevorzugten Ausführungsform der Erfindung unter Beaufschlagung mit elektrischer Spannung Wärmestrahlung, nämlich insbesondere Wärmestrahlung im so genannten Infrarotbereich. Dadurch ist eine besonders gleichmäßige und weitreichende Heizwirkung erreichbar. Es ist jedoch ebenfalls vorstellbar, dass ein gewisser oder sogar ein großer Anteil der erzeugten Wärme als Kontaktwärme, also als Konvektionswärme übertragen wird, nämlich je nach gewünschter Auslegung der erfindungsgemäßen Heizeinrichtung.

In einer ganz besonders bevorzugten Ausführungsform der Erfindung umfasst die Heizeinrichtung weiter eine Steuerung zum Regeln der an der Heizschicht anliegenden Spannung, nämlich dergestalt, dass die Spannung taktweise ein- bzw. ausschaltbar ist, wodurch die Nachschwingung der die Wärmestrahlen emittierenden Moleküle nutzbar ist. Dies bedeutet mit anderen Worten, dass aufgrund der in den wärmespeichernden Einschlüssen gespeicherten Energie die Einlagerungen aus Halbleiter- und/oder Leitermaterial auch bei ausgeschaltetem Strom soviel Energie beziehen können, dass sie weiterhin Wärmestrahlung emittieren können. Dadurch ist ein taktweises Ein- bzw. Ausschalten des Stroms ermöglicht, was eine besonders energiesparende Betriebsweise der erfindungsgemäßen Heizeinrichtung ermöglicht.

Das in der Heizschicht enthaltende Halbleiter- und/oder Leitermaterial könnte aus einem Metalloxid bestehen, wie es aus dem Stand der Technik bekannt ist. Hierbei ist das Metalloxid je nach gewünschter Wellenlänge der Wärmestrahlung bzw. des gewünschten Verhältnisses zwischen Wärmestrahlung und Konvektion zu wählen.

Ebenfalls könnte das Halbleiter- und/oder Leitermaterial in der Heizschicht aus dem Stand der Technik weiterhin bekannten Emittenten von infraroter Strahlung bestehen, wie z.B. aus Gallium-Arsenid.

Die Heizschicht könnte zusätzlich zu dem Halbleitermaterial, dass unter Beaufschlagung mit elektrischer Spannung Wärme- bzw. Infrarotstrahlen emittiert, weitere Materialien enthalten, die unter elektrischer Spannung sichtbares Licht emittieren. Hierdurch können interessante optische Effekte ermöglicht werden. Diese Ausführungsform ist besonders für den Wohnbereich oder den Geschäfts- bzw. Gastronomiebereich interessant.

Die die Heizschicht bildenden Materialien könnten vor ihrer Verarbeitung in Pulverform oder in Form eines Granulats vorliegen. Sie können dann in einer hitzebeständigen Farbe oder in einer hitzebeständigen Grundierung dispergiert und danach auf die Trägerschicht aufgebracht werden. Hierdurch ist eine ganz besonders einfache und schnelle Herstellung der erfindungsgemäßen Einrichtung gewährleistet. Wird die Heizschicht in einer Farbe oder Grundierung dispergiert und mittels eines Siebdruckverfahrens oder eines normalen Farbauftrags auf die Trägerschicht aufgebracht, ist in besonders einfacher Weise eine gleich bleibende Dicke des Auftrags gewährleistet. Weiterhin kann eine hitzebeständige Grundierung bzw. Farbe beliebigen Farbtons gewählt werden, wodurch erneut interessante und vielseitige Farbeffekte ermöglicht sind.

Die Heizschicht könnte auf der der Trägerschicht abgewandten Seite durch eine zusätzliche dünne Versiegelungsschicht geschützt sein. Zu diesem Zweck ist prinzipiell die Verwendung jedes beliebigen, jedoch temperaturbeständigen Versiegelungslacks denkbar. Durch das Aufbringen der Versiegelungsschicht wird die Lebensdauer und die Unempfindlichkeit der aufgetragenen Heizschicht mit einfachen Mitteln weiter erhöht.

Die Dicke der Heizschicht könnte sich im Bereich von einem bis mehreren Mikrometern bewegen. Hierdurch ist eine besonders vielseitige Verwendbarkeit der erfindungsgemäßen Vorrichtung gegeben, da die Heizeinrichtung besonders dünn konstruiert werden kann. Weiterhin ist gewährleitstet, dass die Heizschicht selber möglichst wenig sichtbares Licht und/oder Wärmestrahlung absorbiert.

Die Heizschicht könnte je nach verwendetem Halbleiter- bzw. Leitermaterial mit Wechselstrom oder mit Gleichstrom gespeist werden.

Die Trägerschicht könnte aus einer Glasscheibe bestehen. Glas ist besonders hitzeunempfindlich und kann thermisch hoch belastet werden. Bei entsprechend geeignetem Glas ist auch kein Bersten des Glases aufgrund von Temperaturspannungen zu erwarten. Ebenfalls ist Glas herkömmlicher Art sowohl für sichtbares Licht als auch für infrarote Strahlung durchlässig, wodurch eine besonders geringe Dissipation der in der Heizschicht erzeugten Strahlung innerhalb der Trägerschicht erreicht wird.

Die Trägerschicht könnte in einer weiteren Ausführungsform alternativ aus einer Kunststofffolie oder einer Kunststoffscheibe bestehen. Durch Verwendung einer Kunststofffolie könnten besonders vielseitige Formen der Heizeinrichtung ermöglicht werden. Eine Kunststoffscheibe ist im Vergleich zu Glas besonders leicht und neigt nicht zum Bersten bei hoher thermischer Belastung. In Verbindung mit der erfindungsgemäßen Steuerung bzw. Taktung der Spannungsversorgung kann die Heizeinrichtung auch bei vergleichsweise niedrigen Temperaturen betrieben werden, so dass selbst thermoplastischer Kunststoff als Trägermaterial in Frage kommt.

Die Trägerschicht könnte auf der der Heizschicht zugewandten Seite angeraut sein. Hierdurch ist eine besonders gute Verbindung zwischen der Trägerschicht und der Heizschicht gewährleistet.

Die Trägerschicht und/oder die Schutzschicht könnte für Licht im sichtbaren Bereich durchdringbar sein. Dadurch kann die erfindungsgemäße Heizeinrichtung bspw. auch als Fenster verwendet werden. Andererseits ist es möglich, dass die vorgenannten Farbeffekte erzielt werden.

In einer anderen Ausführungsform der Erfindung könnte die Schutzschicht aus einem Silberspiegel bestehen. Hierdurch ist eine maximal mögliche Reflexion von sowohl sichtbarem als auch infrarotem Licht gewährleistet.

Ebenfalls unter dem Gesichtspunkt einer möglichst hohen Reflexion der Wärmestrahlung an der Schutzschicht könnte diese aus einer Metallplatte oder einer Metallfolie bestehen. Eine Metallplatte ist billig herzustellen, bietet eine sehr hohe Temperaturresistenz sowie eine hohe Reflexion von infraroter Strahlung. Eine Metallfolie ist besonders leicht und bietet ebenfalls eine hohe Reflexion der erzeugten Wärmestrahlung.

Zur Steuerung der erfindungsgemäßen Heizeinrichtung sollte sowohl die Temperatur der Heizschicht als auch die Temperatur des zu heizenden Raums gemessen und überwacht werden. Hierzu könnte zum einen ein Temperaturfühler, insbesondere ein Bimetallfühler, innerhalb oder am Rand der Heizschicht angeordnet sein. Ein Bimetallfühler ist unempfindlich und weist eine besonders lange Lebensdauer auf.

Zur Ermittlung der Raumtemperatur könnte an einer beliebigen Stelle innerhalb des zu heizenden Raums oder an der erfindungsgemäßen Heizeinrichtung ein Temperaturfühler angeordnet sein. Es kann sich wahlweise um ein Thermoelement oder um einen Widerstands-Temperaturfühler handeln. Der Temperaturfühler kann weiterhin wahlweise so angeordnet sein, dass er sich nicht direkt im Strahlengang der durch die Heizeinrichtung emittierten Wärmestrahlung befindet, um die tatsächliche Lufttemperatur im zu heizenden Raum zu erfassen.

In einer weiteren Ausführungsform der erfindungsgemäßen Heizeinrichtung könnte statt einem Heizeffekt wahlweise auch ein Kühleffekt erzielt werden. Es ist denkbar, durch eine gesteuerte Spannungsumkehr und entsprechende Halbleitermaterialien einen so genannten Peltier-Effekt zu erzielen. Die erfindungsgemäße Heizeinrichtung ist hierdurch ganz besonders vielseitig und kann sowohl im Sommer- als auch im Winterbetrieb in Wohn- und Geschäftsräumen eingesetzt werden.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels der erfindungsgemäßen Heizeinrichtung anhand der Zeichnung zu verweisen. In der Zeichnung zeigt
- die einzige Fig.: eine schematische Schnittansicht eines Teils der erfindungsgemäßen Heizeinrichtung, die in dieser Ausführungsform als ein dünnes Paneel ausgebildet ist.

Die einzige Figur zeigt einen Ausschnitt der Heizeinrichtung (1) in Form einer Paneele bzw. eines Schichtverbundes, bestehend aus einer für Infrarotstrahlung durchlässigen Trägerschicht (2), einer zur Erzeugung und Abgabe von Wärme dienenden Heizschicht (3) sowie einer auf der der Trägerschicht (2) abgewandten Seite der Heizschicht (3) ausgebildeten Schutzschicht (4).

Die Heizschicht (3) enthält neben einer elektrisch gut leitenden Matrix und Einlagerungen aus Halbleiter- und/oder Leitermaterial wärmespeichernde Einschlüsse (5). Ebenfalls schematisch dargestellt ist die Stromversorgung, wozu an jeweils einem Ende der Heizschicht (3) Elektroden (6) angebracht sind, an die wahlweise eine Gleich- oder Wechselspannung angelegt werden kann. Die Elektroden (6) können ebenfalls an den horizontalen Enden bzw. Stirnseiten der Heizschicht (3) angebracht werden.

Abschließend sei hervorgehoben, dass das voranstehend beschriebene Ausführungsbeispiel die beanspruchte Lehre erörtert, diese jedoch nicht auf das Ausführungsbeispiel einschränkt.

## Patentansprüche

1. Heizeinrichtung (1), vorzugsweise in Form einer Paneele oder eines dünnen Schichtenverbundes, mit
- einer für Infrarotstrahlung durchlässigen Trägerschicht (2),
- einer zur Erzeugung und Abgabe von Wärme durch Strahlung und/oder Konvektion dienenden Heizschicht (3) und
- einer auf der der Trägerschicht (2) abgewandten Seite der Heizschicht (3) ausgebildeten, Infrarotstrahlung zumindest teilweise reflektierenden Schutzschicht (4),
wobei die Heizschicht (3) eine elektrisch gut leitende Matrix und Einlagerungen aus Halbleiter- und/oder Leitermaterial sowie wärmespeichernde Einschlüsse (5) umfasst und wobei die Heizschicht (3) über zwei Elektroden (6) elektrisch kontaktiert ist.

2. Heizeinrichtung (1) nach Anspruch 1, **dadurch gekennzeichnet, dass** die elektrisch leitende Matrix reinen Kohlenstoff aufweist, wobei der Kohlenstoff vorzugsweise als Pulver mit einer Korngröße im µm-Bereich vorliegt.

3. Heizeinrichtung (1) nach Anspruch 1 oder 2, **dadurch gekennzeichnet, dass** die wärmespeichernden Einschlüsse (5) Keramik und/oder Glas aufweisen, wobei die wärmespeichernden Einschlüsse (5) vorzugsweise aus reinem SiO₂ oder aus einer SiO₂ enthaltenden Mischung bestehen.

4. Heizeinrichtung (1) nach einem der Ansprüche 1 bis 3, **dadurch gekennzeichnet, dass** das Halbleiter- und/oder Leitereigenschaften aufweisende Material der Heizschicht (3) unter Beaufschlagung mit elektrischer Spannung Wärmestrahlung, insbesondere Infrarotstrahlung, emittiert, wobei das Halbleiter- und/oder Leitereigenschaften aufweisende Material der Heizschicht (3) aus einem Metalloxid bestehen kann.

5. Heizeinrichtung (1) nach einem der Ansprüche 1 bis 4, **gekennzeichnet durch** eine Steuerung zum Regeln der an der Heizschicht (3) anliegenden Spannung, wobei die Spannung taktweise ein- bzw. ausschaltbar ist, wodurch die Nachschwingung der die Wärmestrahlen emittierenden Halbleiter- und/oder Leitermaterialien im Sinne einer energiesparenden Betriebsweise nutzbar ist.

6. Heizeinrichtung (1) nach einem der Ansprüche 1 bis 5, **dadurch gekennzeichnet, dass** die Heizschicht (3) zusätzlich Materialien enthält, die unter elektrischer Spannung sichtbares Licht emittieren.

7. Heizeinrichtung (1) nach einem der Ansprüche 1 bis 6, **dadurch gekennzeichnet, dass** die Heizschicht (3) in einer hitzebeständigen Farbe oder in einer hitzebeständigen Grundierung dispergierbar und auf die Trägerschicht (2) aufbringbar ist, wobei die Heizschicht (3) auf der der Trägerschicht (2) abgewandten Seite eine zusätzliche dünne Versiegelungsschicht aufweisen kann.

8. Heizeinrichtung (1) nach einem der Ansprüche 1 bis 7, **dadurch gekennzeichnet, dass** die Heizschicht (3) eine Dicke im Bereich von einem bis mehreren µm aufweist.

9. Heizeinrichtung (1) nach einem der Ansprüche 1 bis 8, **dadurch gekennzeichnet, dass** die Heizschicht (3) mit Wechselstrom oder mit Gleichstrom speisbar ist.

10. Heizeinrichtung (1) nach einem der Ansprüche 1 bis 9, **dadurch gekennzeichnet, dass** die Trägerschicht (2) aus einer Glasscheibe besteht oder dass die Trägerschicht (2) aus einer Kunststofffolie oder aus einer Kunststoffscheibe besteht.

11. Heizeinrichtung (1) nach einem der Ansprüche 1 bis 10, **dadurch gekennzeichnet, dass** die Trägerschicht (2) auf der der Heizschicht (3) zugewandten Seite angeraut ist.

12. Heizeinrichtung (1) nach einem der Ansprüche 1 bis 11, **dadurch gekennzeichnet, dass** die Trägerschicht (2) und/oder die Schutzschicht (4) für Licht im sichtbaren Bereich durchdringbar ist.

13. Heizeinrichtung (1) nach einem der Ansprüche 1 bis 11, **dadurch gekennzeichnet, dass** die Schutzschicht (4) aus einem Silberspiegel oder aus einer Metallplatte oder einer Metallfolie besteht.

14. Heizeinrichtung (1) nach einem der Ansprüche 1 bis 13, **gekennzeichnet durch** einen Temperaturfühler zur Ermittlung der Temperatur der Heizschicht (3), insbesondere einen Bimetallfühler, der innerhalb oder am Rand der Heizschicht (3) angeordnet ist, und/oder **durch** einen Temperaturfühler zur Ermittlung der Raumtemperatur.

15. Heizeinrichtung (1) nach einem der Ansprüche 1 bis 14, **gekennzeichnet durch** die Realisierung eines Kühleffekts (Peltier-Effekt).
